# EUROPEAN PATENT APPLICATION

(11) **EP 4 745 966 A1**
(43) Date of publication of application: **20.05.2026**
(21) Application number: 24839689.7
(22) Date of filing: 05.07.2024
(51) Int. Cl.: G11B 5/73, C03C 3/085, C03C 3/087, C03C 3/091, G11B 5/84

(54) **GLASS COMPOSITION FOR INFORMATION RECORDING MEDIUM AND GLASS PLATE FOR INFORMATION RECORDING MEDIUM**

(30) Priority: 10.07.2023 JP 2023113101
(71) Applicant: NIPPON SHEET GLASS COMPANY, LIMITED, Tokyo 108-6321 (JP)
(72) Inventor: KURACHI, Junji, Tokyo 108-6321 (JP); MIYABE, Daisuke, Tokyo 108-6321 (JP); TSUNODA, Shingo, Tokyo 108-6321 (JP)
(74) Representative: Cabinet Beau de Loménie
(86) International application number: PCT/JP2024/024487
(87) International publication number: WO 2025/013797

(57) **Abstract**

A glass composition having a high Young's modulus and suitable for an information recording medium typified by a hard disk drive (HDD) is provided. The glass composition of the present invention has a Young's modulus of 98 GPa or more and including 17 to 30 mol% MgO.

## Description

### TECHNICAL FIELD

The present invention relates to a glass composition for an information recording medium, specifically, a glass composition suitable for an information recording medium configured to be included in an information recording device typified by a hard disk drive (HDD). The present invention also relates to a glass sheet for an information recording medium.

### BACKGROUND ART

Larger recording capacity and shorter access time have been required of information recording devices such as magnetic disks typified by HDDs. One way to achieve this is through faster rotation of an information recording medium. However, a substrate of an information recording medium deflects under rotation. The deflection may increase resonance of the information recording medium with increasing rotational speed and may end up with a collision between the information recording medium and a magnetic head to cause a read error or a magnetic head crash. Because of this, it is impossible to decrease the distance, called the flying height, between a magnetic head and an information recording medium having a conventional substrate to a certain distance or less. This prevents an increase in recording capacity. Substrates desirably have a high Young's modulus to reduce deflection and resonance of the substrates. Glass is known to basically have a higher Young's modulus than that of aluminum alloys forming aluminum substrates, depending on its composition. Patent Literature 1, for example, discloses a glass composition developed for use as substrates of information recording media.

### CITATION LIST

### Patent Literature

Patent Literature 1: WO 2012/131824 A1

### SUMMARY OF INVENTION

### Technical Problem

The Young's modulus of the glass composition disclosed in Patent Literature 1 is approximately 80 GPa or less, and there is still room for improvement. Therefore, the present invention aims to provide a glass composition suitable for an information recording medium.

### Solution to Problem

The present invention provides a glass composition for an information recording medium, the glass composition having a Young's modulus of 98 GPa or more and including 17 to 30 mol% MgO.

### Advantageous Effects of Invention

According to the present invention, a glass composition suitable for an information recording medium is provided.

### BRIEF DESCRIPTION OF DRAWING

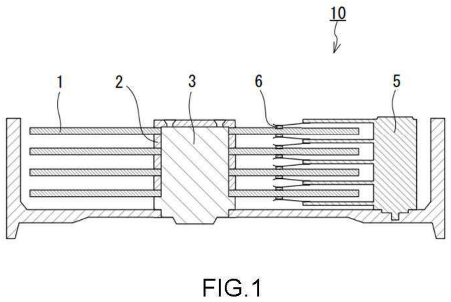

FIG. 1 is a partial cross-sectional view showing an example of an HDD.

### DESCRIPTION OF EMBODIMENTS

Hereinafter, the present invention will be described in detail. The following description is not intended to limit the present invention to specific embodiments.
Herein, being "substantially free of" a component means that the content of the component is less than 0.1 mol%, preferably less than 0.08 mol%, and more preferably less than 0.05 mol%. Moreover, hereinafter, a temperature at which the logarithm (logη) of a liquid viscosity η (unit: dPa·s) of a melt of a glass composition is n may be referred to as Tn. Furthermore, hereinafter, the upper and lower limits of contents and properties can be employed in any combination.

The present invention provides a glass composition for an information recording medium and a glass sheet for an information recording medium according to the following aspects. A glass composition according to a first aspect has a Young's modulus of 98 GPa or more, and includes 17 to 30 mol% MgO.

In a second aspect, the glass composition according to the first aspect includes Al₂O₃.

In a third aspect, the glass composition according to the first or second aspect has a specific elastic modulus of 36 MNm/kg or more.

In a fourth aspect, the glass composition according to any one of the first to third aspects further includes 0.2 to 3 mol% Li₂O and 0.2 to 3 mol% B₂O₃.

In a fifth aspect, the glass composition according to any one of the first to fourth aspects has a value ΔT of 20°C or higher, the value ΔT being determined by subtracting a devitrification temperature from a liquidus temperature (T2).

In a sixth aspect, the glass composition according to any one of the first to fifth aspects further includes Na₂O.

In a seventh aspect, the glass composition according to any one of the first to sixth aspects includes, in mol%:

| | |
|---|---|
| SiO₂ | 50 to 65%; |
| Al₂O₃ | 7.5 to 26%; |
| MgO | 15 to 30%; |
| CaO | 0 to 8%; |
| B₂O₃ | 0 to 3%; |
| Li₂O | 0 to 3%; and |
| Na₂O | 0 to 0.2%, wherein |

a sum of a MgO content and a CaO content is 18 to 35 mol%, and
a molar ratio calculated from Al₂O₃/(MgO+CaO) is less than 1.

In an eighth aspect, the glass composition according to any one of the first to seventh aspects includes, in mol%:

| | |
|---|---|
| SiO₂ | 53 to 60%; |
| Al₂O₃ | 11 to 15%; |
| MgO | 18 to 30%; |
| CaO | 0 to 5%; |
| B₂O₃ | 0.2 to 1.5%; |
| Li₂O | 0.5 to 2.5%; and |
| Na₂O | 0 to 0.2%, wherein |

a molar ratio calculated from Al₂O₃/(MgO+CaO) is 0.3 to 0.5.

In a ninth aspect, the glass composition according to any one of the first to seventh aspects includes, in mol%:

| | |
|---|---|
| SiO₂ | 53 to 60%; |
| Al₂O₃ | 15 to 26%; |
| MgO | 17 to 30%; |
| CaO | 0 to 5%; |
| B₂O₃ | 0.2 to 3%; |
| Li₂O | 0.2 to 1.5%; and |
| Na₂O | 0 to 0.2%, wherein |

a molar ratio calculated from Al₂O₃/(MgO+CaO) is 0.5 to 1.0.

In a tenth aspect, the glass composition according to any one of the first to seventh aspects further includes 50 to 57.8 mol% SiO₂, wherein
a sum of a TiO₂ content and an Y₂O₃ content is 3 mol% or less.

A glass sheet of an eleventh aspect includes the glass composition according to any one of the first to tenth aspects.

### [Hard Disk (HDD)]

The glass composition and the glass sheet of the present embodiment have a high Young's modulus and a low specific gravity, and are suitable for an information recording device, in particular, an information recording medium included in an HDD. FIG. 1 is a partial cross-sectional view showing an example of an HDD. An HDD 10 includes a shroud forming a sealed case and a plurality of platters 1 disposed in the shroud. FIG. 1 shows only a portion of the shroud. The number of platters 1 each being an information recording medium is four in the figure, but is not limited to four. Each platter 1 includes a glass sheet formed from the glass composition and magnetic recording layers each arranged on a different principal surface of the glass sheet. Each platter 1 is a ring-shaped disk having a circular hole at the center. Ring-shaped spacers 2 are each disposed between adjacent platters 1 to secure a given interval. The four platters 1 are rotatably supported by a spindle motor 3 in the hole. A head assembly 5 is further disposed in the shroud. The head assembly 5 includes a main body disposed lateral to outer portions of the four platters 1 and swing arms extending from the main body along the principal surfaces of the platters 1. Each swing arm has, at its end, a magnetic head 6 called a slider. The number of magnetic heads 6 disposed is the same as the number of principal surfaces of the platters 1, i.e., eight in FIG. 1. The magnetic heads 6 slightly float off the principal surfaces of the platters as the platters 1 start rotating. Deflection of the platter 1 can result in a crash of the magnetic head 6.

In an HDD, a plurality of thin platters are disposed in a small space for capacity increase. Because of such a dense disposition, slight deflection of a rotating platter makes a crash of the magnetic head more likely. Therefore, the Young's modulus of the material of the platters is desirably high. Moreover, the specific gravity of the material of the platters is desirably small to reduce a load on a small motor that rotates the plurality of platters. Along with advances in capacity increase, decrease in specific gravity as well as increase in Young's modulus become more and more important. Furthermore, in terms of improving the areal density, a magnetic recording layer compatible with energy-assisted magnetic recording typified by heat-assisted magnetic recording (HAMR) is desirably used. A high-temperature thermal treatment is needed to form a magnetic recording layer compatible with heat-assisted magnetic recording. In this case, heat resistance is required of a glass sheet serving as the substrate. As for properties of the glass composition, if necessary, the glass transition temperature (Tg) which is a measure of heat resistance is desirably regarded as important, as well as the Young's modulus and the specific gravity.

### [Components of Glass Composition]

Hereinafter, every percentage symbol (%) used to indicate a content of a glass component is "mol%".

### (SiO₂)

SiO₂ is a component that forms a glass network and contributes to improvement of heat resistance. A SiO₂ content may be 50 to 65%. The SiO₂ content is preferably 52% or more, even 53% or more, or particularly 54% or more, and may be, in some cases, 56% or more, or even 57% or more. Too high a SiO₂ content can decrease the Young's modulus. Therefore, the SiO₂ content is preferably 62% or less, 61% or less, even 60% or less, or particularly 59% or less, and may be, in some cases, 58% or less, 57.8% or less, or even 57.5% or less.

### (Al₂O₃)

Al₂O₃ contributes to maintenance of the heat resistance, the water resistance, and the like of the glass composition, and is also a component that affects the devitrification temperature, the viscosity, and the like. An Al₂O₃ content may be 7.5 to 26%. The Al₂O₃ content is preferably 9% or more, even 10% or more, or particularly 11% or more, and may be, in some cases, 12% or more, or even 14% or more. Too high an Al₂O₃ content can cause a great increase in liquidus temperature, which is a disadvantage in manufacturing. Hence, the Al₂O₃ content is preferably 24% or less, or even 22% or less, and may be, in some cases, 20% or less, or even 19% or less.

In view of mass production, in particular, the devitrification temperature of the glass composition is preferably sufficiently low relative to the liquidus temperature. The Al₂O₃ content suitable for sufficiently decreasing the devitrification temperature relative to the liquidus temperature is 11 to 15%, even 11 to 14%, or particularly 11.5 to 13.5%. As described later, to sufficiently decrease the devitrification temperature relative to the liquidus temperature, an appropriate amount of Li₂O and/or B₂O₃ may be added. An Al₂O₃ content of 11 to 15% can also contribute to decreasing the specific gravity. The Al₂O₃ content suitable for sufficiently increasing a crack resistance load is 15 to 26%, even 16 to 22%, or particularly 17 to 21%.

### <(Al₂O₃)/(SiO₂+Al₂O₃)>

A molar ratio of Al₂O₃ to a sum of the SiO₂ content and the Al₂O₃ content is desirably set within the range of 0.15 to 0.35. This makes it easier to achieve a good balance between a high Young's modulus and a moderate liquidus temperature. The molar ratio Al₂O₃/(SiO₂+Al₂O₃) may be 0.16 or more, even 0.18 or more, in some cases, 0.20 or more, or 0.30 or less. In a composition including both B₂O₃ and Li₂O, the molar ratio Al₂O₃/(SiO₂+Al₂O₃) suitable for decreasing the specific gravity is 0.25 or less.

### (MgO)

MgO contributes to improvement of the Young's modulus, and is also a component that affects the devitrification temperature, the viscosity, and the like. A MgO content may be 17 to 30%. The MgO content is preferably 18% or more, or particularly 20% or more, and may be, in some cases, 21% or more, or even 22% or more. Too high a MgO content can cause a great increase in liquidus temperature. Hence, the MgO content is preferably 29% or less, and may be, in some cases, 28% or less, or even 27% or less.

The MgO content suitable for sufficiently decreasing the devitrification temperature relative to the liquidus temperature is 18 to 30%, or even 20 to 28%.

The MgO content suitable for sufficiently increasing the crack resistance load is 18 to 30%, even 18 to 26%, or particularly 22 to 26%.

### (CaO)

CaO is an optional component that contributes to maintenance of the water resistance and the like and that affects the devitrification temperature, the viscosity, and the like. A CaO content may be 0 to 8%. Addition of an appropriate amount of CaO is preferable in terms of decreasing the liquidus temperature. Hence, CaO is preferably added (with a content of more than 0%), and the CaO content is preferably 0.1% or more, or even 0.12% or more, and may be, in some cases, 2% or more, or even 3% or more. However, too much CaO can decrease the Young's modulus. Hence, the CaO content is preferably 7% or less, even 5% or less, particularly 4.5% or less, or, in some cases, 4% or less. The CaO content particularly suitable for improving the Young's modulus and the crack resistance load is less than 1%.

### <Sum of MgO and CaO>

A sum of the MgO content and the CaO content may be 18 to 35%, preferably 20 to 30%.

### <(Al₂O₃)/(MgO+CaO)>

A molar ratio of Al₂O₃ to the sum of the MgO content and the CaO content is desirably set to less than 1. This makes it easier to achieve a good balance between a high Young's modulus and a moderate liquidus temperature. The molar ratio Al₂O₃/(MgO+CaO) is preferably 0.3 to 0.9, or particularly 0.35 to 0.85, and may be, in some cases, 0.4 to 0.7, or even 0.4 to 0.6. The molar ratio Al₂O₃/(MgO+CaO) may be 0.3 to 0.5. It should be noted that the molar ratio Al₂O₃/(MgO+CaO) particularly suitable for improving the crack resistance load is 0.5 to 1.0, 0.7 or more and less than 1, even 0.7 to 0.9, or particularly 0.8 to 0.9.

### (B₂O₃)

B₂O₃ is an optional component that forms a glass network and that affects the properties, such as the devitrification temperature and the viscosity. A B₂O₃ content may be 0 to 3%. Addition of a minute amount of B₂O₃ can contribute to decreasing the devitrification temperature. A minute amount of B₂O₃ can also contribute to decreasing the specific gravity. Hence, B₂O₃ is preferably added (with a content of more than 0%), and the B₂O₃ content is preferably 0.1% or more, 0.2% or more, or particularly 0.3% or more, and may be, in some cases, 0.5% or more, or even 0.7% or more. However, too much B₂O₃ can decrease the Young's modulus. The B₂O₃ content is preferably 2.5% or less, even 2% or less, or particularly 1.8% or less, and may be, in some cases, 1.6% or less, or even 1.5% or less. A preferable range of the B₂O₃ content is, for example, 0.1 to 1.6%.

### (Li₂O)

Li₂O is a component that modifies a glass network, and is an optional component that affects the properties, such as the liquidus temperature, the devitrification temperature, and the viscosity. A Li₂O content may be 0 to 3%. Addition of Li₂O within this range is effective in decreasing the devitrification temperature. Hence, Li₂O is preferably added (with a content of more than 0%), and the Li₂O content is preferably 0.1% or more, 0.2% or more, or particularly 0.3% or more, and may be, in some cases, 0.5% or more, or even 0.7% or more. Too high a Li₂O content can decrease the Young's modulus. Hence, the Li₂O content is preferably 2.5% or less, even 2% or less, or particularly 1.8% or less, and may be, in some cases, 1.6% or less, or even 1.5% or less. A preferable range of the Li₂O content is, for example, 0.2 to 2.5% and higher than the Na₂O content.

### <Coexistence of B₂O₃ and Li₂O>

Coexistence of B₂O₃ and Li₂O (B₂O₃ > 0%, Li₂O > 0%) makes it easier to appropriately adjust the liquidus temperature and the devitrification temperature of glass. Coexistence of B₂O₃ and Li₂O is also advantageous in terms of decreasing the specific gravity of glass. A sum of the B₂O₃ content and the Li₂O content is preferably 0.1 % or more, even more than 0.5%, or particularly 0.7% or more, and may be, in some cases, 1% or more. Moreover, the sum is preferably 5.5% or less, even 5% or less, or particularly 4%, and may be, in some cases, 3.5% or less. The B₂O₃ content and the Li₂O content may each be 0.1 to 4%, even 0.2 to 3%, or particularly 0.2 to 2.5%. In terms of decreasing the specific gravity, the B₂O₃ content and the Li₂O content may each be 0.1 to 1.3%.

Adding B₂O₃ and Li₂O at an appropriate ratio is advantageous in terms of improving the properties. A molar ratio represented by B₂O₃/Li₂O is suitably 0.2 to 5, even 0.4 to 2.5, particularly 0.5 to 2, or, in some cases, 0.8 to 1.25.

### (Na₂O)

Similarly to Li₂O, Na₂O is an optional component that affects the properties, such as the liquidus temperature, the devitrification temperature, and the viscosity. However, since Na₂O has a greater decreasing effect on Young's modulus than Li₂O, a Na₂O content may be 0 to 0.2%. It is basically desirable that the glass composition be free of Na₂O; however, for refining of a glass melt, Na₂O is preferably added in an amount of 0.2% or less, even 0.15% or less, or, for example, more than 0% and less than 0.1%.

### <Sum of Above-Described Components>

A sum of the contents of the above-described seven components (SiO₂, Al₂O₃, MgO, CaO, B₂O₃, Li₂O, Na₂O) is preferably 95% or more, even 97% or more, particularly 98% or more, or especially 99% or more, and may be, in some cases, 99.5%, even more than 99.9%, or 100%. An embodiment where the sum of the contents of the seven components is 100% is, in other words, an embodiment where the glass composition consists of SiO₂, Al₂O₃, MgO, CaO, B₂O₃, Li₂O, and Na₂O.

### <Additional Components>

Examples of additional components other than the above-described seven components are as follows. It should be noted that the additional components are not limited to these, and the contents of the additional components are examples.

### (K₂O)

Similarly to Li₂O, K₂O is also an optional component that affects the properties, such as the liquidus temperature, the devitrification temperature and the viscosity, and has a promoting effect on refining a glass melt. However, since K₂O has a greater decreasing effect on Young's modulus than Na₂O, a K₂O content is preferably set within the range of 0 to 0.1%, even 0 to 0.05%, or particularly 0 to 0.03%.

### (SrO)

SrO is also an optional component that affects the properties, such as the liquidus temperature, the devitrification temperature, and the viscosity. However, addition of SrO can also decrease the Young's modulus. Moreover, too much SrO can impair homogenization of a glass melt. Therefore, a SrO content is preferably set within the range of 0 to 5%. The SrO content is suitably 3% or less, even 1% or less, particularly 0.5% or less, or especially 0.1% or less. The SrO content is preferably set such that a sum of the SrO content and the CaO content is 8% or less, even 6% or less, particularly 5% or less, or, in some cases, 4% or less.

### (BaO)

BaO is also an optional component that affects the properties, such as the liquidus temperature, the devitrification temperature, and the viscosity. However, addition of BaO can significantly decrease the Young's modulus. Additionally, BaO is a component that is environmentally unfriendly and imposes a heavy work burden. Therefore, the glass composition is preferably substantially free of BaO.

### (Transition Metal Oxide, Etc.)

An oxide of a transition element (in group 3 to group 11 in the periodic table), called a transition metal oxide, may also be an additional component. Examples of the transition metal oxide include TiO₂, ZrO₂, Fe₂O₃, Y₂O₃, La₂O₃, and CeO₂. ZnO which is an oxide of a group 12 element may also be an additional component. It is basically desirable that these oxides be excluded, but these oxides are sometimes inevitably introduced as impurities derived from a raw material or a production apparatus. Some of the oxides in a minor amount sometimes exhibit their effects as, for example, refining agents when added. The total content of the oxides of the group 3 to group 12 elements is preferably 3% or less, more preferably 1% or less, and particularly preferably 0.5% or less, and may be, if necessary, limited to 0.1% or less. The content of each transition metal oxide is preferably 0.5% or less, particularly preferably 0.3% or less, and more particularly preferably 0.1% or less.

A sum of the TiO₂ content and the Y₂O₃ content may be 3% or less, or even 2% or less. The TiO₂ content and the Y₂O₃ content may each be 1% or less, or 0.7% or less. It can be advantageous to reduce the contents of these components in terms of manufacturing cost. Reducing the contents of these components is also advantageous in terms of decreasing the specific gravity.

The content of an oxide of a transition element having different valences in the glass composition is herein determined by assuming that the metal in the oxide has the maximum oxidation number. For example, iron oxide commonly exists as Fe₂O₃ or FeO in the glass composition. Thus, an iron oxide existing as FeO is assumed to be Fe₂O₃, and the content thereof is combined with the content of an iron oxide existing as Fe₂O₃ to determine the content of iron oxide (which may commonly be described as "T-Fe₂O₃").

### (Other Components)

Examples of additional components other than the above include SnO₂, Sb₂O₃, Sb₂O₅, SOs, Cl, and F. These components can function as refining agents. Examples of other additional components include Ga₂O₃ and P₂O₅. Each of the contents of the components from SnO₂ to P₂O₅ exemplified in this paragraph is also preferably 0.5% or less, particularly 0.3% or less, or especially 0.1% or less.

### <Examples of Preferred Embodiments of Glass Composition>

In one embodiment of the present invention, the glass composition is substantially free of oxides of rare-earth elements. In another embodiment of the present invention, the glass composition includes 0 to 0.5% T-Fe₂O₃, and is substantially free of oxides of divalent metals excluding MgO, CaO, and FeO. In still another embodiment of the present invention, the glass composition is substantially free of alkali metal oxides excluding Li₂O and Na₂O. In yet another embodiment of the present invention, the glass composition is substantially free of TiO₂ and ZrO₂. In a further embodiment of the present invention, the nitride content is 10 wt% or less in the glass composition, and the glass composition is preferably substantially free of nitrides. In an additional embodiment of the present invention, the glass composition is not a glass-ceramic. In other words, a diffraction peak derived from a crystal is not confirmed by X-ray diffraction.

In one embodiment of the present invention, a sum of the contents of the above seven components (SiO₂, Al₂O₃, MgO, CaO, B₂O₃, Li₂O, and Na₂O) and additional five components (K₂O, SrO, TiO₂, ZrO₂, and T-Fe₂O₃) in the glass composition is 99% or more, even 99.5% or more, particularly 99.9% or more, especially 99.95% or more, or, in some cases, 100%. In this embodiment, the contents of the additional five components are as follows: K₂O, 0 to 0.05%; SrO, 0 to 5%; TiO₂, 0 to 0.1%; ZrO₂, 0 to 0.1%; and T-Fe₂O₃, 0 to 0.5%.

In one embodiment of the present invention, the sum of the contents of the above seven components (SiO₂, Al₂O₃, MgO, CaO, B₂O₃, Li₂O, and Na₂O) and additional three components (K₂O, TiO₂, and T-Fe₂O₃) in the glass composition is 99% or more, even 99.5% or more, particularly 99.9% or more, especially 99.95% or more, or, in some cases, 100%. In this embodiment, the contents of the additional three components are as follows: K₂O, 0 to 0.05%; TiO₂, 0 to 0.1%; T-Fe₂O₃, 0 to 0.5%.

In one embodiment of the present invention, the glass composition includes:

| | |
|---|---|
| SiO₂ | 53 to 60%; |
| Al₂O₃ | 11 to 15%; |
| MgO | 18 to 30%; |
| CaO | 0 to 5%; |
| B₂O₃ | 0.2 to 1.5%; |
| Li₂O | 0.5 to 2.5%; and |
| Na₂O | 0 to 0.2%, wherein |

the molar ratio calculated from Al₂O₃/(MgO+CaO) is 0.3 to 0.5.

The molar ratio calculated from Al₂O₃/(MgO+CaO) may be 0.3 or more and less than 0.5.

The sum of the MgO content and the CaO content in this glass composition is 18 to 35%.

This embodiment is particularly suitable for adjusting the devitrification temperature in a preferable range in relation to the liquidus temperature and the like.

In one embodiment of the present invention, the glass composition includes:

| | |
|---|---|
| SiO₂ | 53 to 60%; |
| Al₂O₃ | 15 to 26%; |
| MgO | 17 to 30%; |
| CaO | 0 to 5%; |
| B₂O₃ | 0.2 to 3%; |
| Li₂O | 0.2 to 1.5%; and |
| Na₂O | 0 to 0.2%, wherein |

the molar ratio calculated from Al₂O₃/(MgO+CaO) is 0.5 to 1.0, preferably 0.7 to 0.9.

The sum of the MgO content and the CaO content in this glass composition is 18 to 35%.

In this embodiment, the CaO content may be 0 to 4.5%. This embodiment is particularly suitable for improving the crack resistance load.

### [Properties of Glass Composition]

In an information recording device, such as an HDD, reduction of deflection of an information recording medium is required. This is because, for example, in an HDD, when a rotating platter deflects, a magnetic head can come into contact with the platter and crash, as described above. A high rigidity of the glass composition forming the substrate of a platter, specifically, a high Young's modulus, is desired so as to reduce deflection. In addition, the glass composition forming the substrate of a platter is desired to have a low specific gravity. Weight reduction of a platter by decreasing the specific gravity of the glass composition can contribute to reducing power consumption by an HDD. Increase in Young's modulus and decrease in specific gravity of the glass composition are particularly important for information recording devices having increased capacities and typified by an HDD including a plurality of platters. As described above, in relation with a magnetic recording layer compatible with heat-assisted magnetic recording, increase in Tg of the glass composition is also important.

### (Specific Gravity)

In one embodiment of the present invention, the glass composition has a specific gravity of 3.0 or less, 2.8 or less, preferably 2.7 or less, more preferably 2.65 or less, even more preferably 2.64 or less, or particularly preferably 2.63 or less. The glass composition having such a small specific gravity is particularly suitable for an information recording medium. The lower limit of the specific gravity may be, but not particularly limited to, 2.5 or more.

### (Young's modulus)

In one embodiment of the present invention, the glass composition has a Young's modulus of 98 GPa or more, 100 GPa or more, preferably 101 GPa or more, even more preferably 103 GPa or more, or, in some cases, 104 GPa or more. The upper limit of the Young's modulus may be, but not particularly limited to, 110 GPa or less, even 107 GPa or less, or, in some cases, 105 GPa or less. The method for measuring the Young's modulus is described in EXAMPLES. The glass composition having a high Young's modulus is suitable for an information recording medium.

### (Specific Elastic Modulus)

The specific elastic modulus can be determined by dividing the Young's modulus by the specific gravity. The glass composition having a high specific elastic modulus is particularly suitable for an information recording medium. This is because it is desirable that when an information recording medium is rotated at high speed, a load on a drive unit, such as a motor, be small and deflection of the information recording medium be slight. In one embodiment of the present invention, the glass composition has a specific elastic modulus of 36 MNm/kg or more, 36.5 MNm/kg or more, preferably 37 MNm/kg or more, even more preferably 38 MNm/kg or more, or particularly preferably 39 MNm/kg or more.

### (Crack Resistance Load)

In one embodiment of the present invention, the glass composition has a crack resistance load of 300 g or more, preferably 400 g or more, more preferably 500 g or more. Surprisingly, the glass composition provided according to one embodiment of the present invention can have a particularly high crack resistance load, such as 900 g or more, even 1000 g or more, or particularly 1200 g or more. The upper limit of the crack resistance load is not limited to a particular value, and may be 2000 g or less. The method for measuring the crack resistance load is described in EXAMPLES. The glass composition having a high crack resistance load is suitable for an information recording medium. In another embodiment of the present invention, the glass composition has a crack resistance load of 300 to 550 g and a devitrification temperature of 1250 to 1350°C.

### (High-Temperature Viscosity)

In one embodiment of the present invention, a temperature T2 (a temperature at which the logarithm (logη) of the liquid viscosity η (unit: dPa·s) of a melt of the glass composition is two; liquidus temperature) of the glass composition can be 1490°C or lower, 1480°C or lower, even 1470°C or lower, or, in some cases, 1460°C or lower. A low T2 is suitable for mass production of information recording media. Likewise, a temperature T2.5 thereof can be 1400°C or lower, 1390°C or lower, even 1380°C or lower, or, in some cases, 1370°C or lower. A temperature T3 thereof can be 1310°C or lower, 1300°C or lower, even 1290°C or lower, or, in some cases, 1280°C or lower.

### (Devitrification Temperature)

In one embodiment of the present invention, the glass composition has a devitrification temperature TL of 1450°C or lower, preferably 1400°C or lower, more preferably 1380°C or lower, or particularly preferably 1350°C or lower. A glass composition having a high devitrification temperature TL is likely to precipitate crystals. A crystal precipitated on a surface of an information recording medium, such as a platter, can impair the smoothness of the surface of the medium. A low devitrification temperature is important for the glass composition for an information recording medium.

### (Relationship between High-Temperature Viscosity and Devitrification Temperature)

In one embodiment of the present invention, the glass composition has a value (ΔT) of 20°C or higher, preferably 30°C or higher, more preferably 50°C or higher, or particularly preferably 100°C or higher, the value (ΔT) being determined by subtracting the devitrification temperature TL of the glass composition from the liquidus temperature T2.

### (Glass Transition Temperature)

In one embodiment of the present invention, the glass composition has a glass transition temperature (glass-transition point) Tg of 600°C or higher, 650°C or higher, preferably 700°C or higher, more preferably 725°C or higher, even more preferably 750°C or higher, or particularly preferably 800°C or higher. The glass composition having a high Tg is particularly suitable for an information recording medium; as described above, a high-temperature treatment is sometimes needed in a step of forming a recording layer, and, in such cases, heat resistance is required of an information recording medium. The upper limit of the glass transition temperature Tg is, for example, but not particularly limited to, 850°C.

Methods for measuring the liquid viscosity η, the devitrification temperature TL, and the glass transition temperature Tg are described in EXAMPLES.

### [Information Recording Medium]

The glass composition described above is suitable for an information recording medium. In another aspect, the present invention provides a glass sheet including the glass composition according to the present invention. The glass sheet may have a disk shape. The disk-shaped glass sheet may have a hole at the center. The outer diameter of the glass sheet may be 3.5 inches or less, 2.5 inches or less, or even 1.8 inches or less. The thickness of the glass sheet may be, for example, 1 mm or less, 0.8 mm or less, 0.7 mm or less, 0.635 mm or less, or even 0.5 mm or less.

The glass sheet may be formed of a chemically strengthened glass. Chemical strengthening is, as is commonly known, a treatment in which an alkali ion included in glass is substituted by another alkali ion having a larger ionic radius, such as substitution of a lithium ion by a sodium ion or a sodium ion by a potassium ion, to introduce a compressive stress to a surface of the glass. The chemical strengthening of the glass sheet is commonly performed by bringing the glass sheet into contact with a molten salt including an alkali ion. Examples of the molten salt can include potassium nitrate and a salt mixture of potassium nitrate and sodium nitrate. When a molten salt consisting of potassium nitrate is used, an appropriate temperature of the molten salt is approximately 460°C to approximately 500°C in view of thermal decomposition of the potassium nitrate and the heat resistance of the glass. An appropriate time during which the glass and the molten salt are kept in contact with each other is, for example, 4 hours to 12 hours.

The glass sheet of the present embodiment can be mass-produced by the float process. As can be understood from the above temperature properties, the glass composition of the present embodiment is suitable for mass production by the float process. As is well known, the float process includes: melting glass raw materials in a melting furnace; and introducing the molten glass raw materials into a float bath to shape the molten glass raw materials into a glass sheet on molten tin in the float bath. In one embodiment of the present invention, float glass is produced by preparing glass raw materials so that a glass composition forming the resulting glass sheet will have the above desirable composition. The float glass is shaped with one principal surface in contact with molten tin in a float bath, and the tin spreads over the principal surface. Accordingly, one principal surface, called a bottom surface, of the float glass has a surface layer formed of tin spread thereon. The other principal surface, called a top surface, does not have such a surface layer. From another perspective, in the float glass, the tin concentration on one principal surface is higher than that on the other principal surface.

### EXAMPLES

Hereinafter, the present invention will be described in more details with examples.

Glass raw materials were prepared according to each of the compositions shown in Tables 1 and 2, and were molten for four hours in an electric furnace maintained at 1500 to 1600°C. During the melting, stirring was performed several times with a quartz glass stirrer to ensure homogenization of the glass. After that, the molten glass was poured into a stainless steel frame to form a sheet of glass. The sheet of glass was held at a temperature 20 to 50°C above the glass transition temperature of the glass for two hours or longer, and was then slowly cooled by allowing it to cool to room temperature over approximately eight hours. A glass specimen to be measured was thus formed. The glass specimen obtained in this manner was used to measure its properties below.

### (Specific Gravity)

The specific gravity (density) was measured for a small piece of each glass specimen by Archimedes' method using water as an immersion liquid.

### (Young's Modulus)

The Young's modulus was measured according to the ultrasonic pulse method specified in Japanese Industrial Standards (JIS) R 1602-1995. Each test piece was a rectangular parallelepiped measuring 5 mm × 25 mm × 35 mm. The measurement was performed at room temperature in air. An apparatus used was Model 25DL Plus manufactured by Panametrics. In addition, the Young's modulus was divided by the specific gravity to obtain the specific elastic modulus.

### (Crack Resistance Load)

The crack resistance load was measured by a test in which a Vickers indenter was pressed against a mirror-polished surface of each glass specimen. An apparatus used was a Vickers hardness tester manufactured by Akashi Corporation. The glass specimen was processed into a sheet having parallel planes. The plane against which the indenter was to be pressed was mirror-polished using a suspension of a cerium oxide abrasive. The Vickers indenter was pressed against the mirror-polished plane for 15 seconds. Five minutes after removing the load, whether a crack initiated from a vertex of a square indentation on the surface of the glass specimen was examined. Whether a crack initiated or not was determined by observing it using a microscope incorporated in the Vickers hardness tester. The magnification of the microscope was 100 times. This examination was performed 10 times, and a crack initiation probability P was calculated by dividing the number of vertices from which a crack initiated by the total number, namely 40, of examined vertices. The above examination was repeated with different loads of 50 g, 100 g, 200 g, 300 g, 500 g, 1000 g, and 2000 g in this order to determine the crack initiation probability P at each load until P = 100% was reached. In this manner, two loads WH and WL adjacent to each other across P = 50% and crack initiation probabilities PH and PL (PH < 50% < PL) at these loads were obtained. Load and crack initiation probability were respectively represented on the horizontal axis and the vertical axis. A straight line through two points (WH,PH) and (WL,PL) was drawn, and a load at P = 50% was defined as the crack resistance load.

### (Devitrification Temperature TL)

Each glass specimen was crushed into particles. Glass particles that passed through a sieve having an aperture size of 2.380 mm and that were left on a sieve having an aperture size of 1.000 mm were collected. The glass particles were immersed in ethanol and subjected to ultrasonic cleaning, followed by drying in a constant-temperature chamber. The glass particles weighing 30 to 32 g were spread to an almost uniform thickness on a platinum boat measuring 12 mm in width, 200 mm in length, and 10 mm in depth as a measurement specimen. This platinum boat was held in an electric furnace (temperature gradient furnace) with a temperature gradient of 950 to 1550°C for two hours. The temperature of a portion having the highest temperature among portions where crystalline phases (devitrification) distributed in the measurement specimen were observed was evaluated as the liquidus temperature TL.

### (T2, T2.5, T3)

T2, T2.5, and T3 were determined for each glass specimen by measuring viscosities at temperature intervals of 25°C by a platinum ball-drawing method and calculating intermediate viscosities from the Fulcher equation.

### (Glass Transition Temperature Tg)

A columnar specimen having a diameter of 5 mm and a length of 18 mm was produced from each glass specimen, and was measured for a thermal expansion curve by heating at 5°C/min using a TMA apparatus. The glass transition temperature Tg was obtained from this curve.

Each obtained sample was measured for the above properties. Tables 1 and 2 show the results. As can be understood from Comparative Examples 3 and 4, the Young's modulus can be increased by adding TiO₂, Y₂O₃, etc. However, as can be understood from Examples 1 to 10, improvement in Young's modulus by MgO is advantageous in that it enables control of the specific gravity along with improvement in Young's modulus. The Young's moduli of Comparative Examples 1, 2, and 5 to 7 were less than 98 GPa. As for Comparative Examples 1 and 2, T2 is relatively high, and that is a slight disadvantage in mass production.

**[Table 1]**

| Example No. | 1 | 2 | 3 | 4 | 5 | 6 | 7 | 8 | 9 | 10 |
|---|---|---|---|---|---|---|---|---|---|---|
| SiO₂ | 54.92 | 57.33 | 57.43 | 54.94 | 54.94 | 57.35 | 54.84 | 54.88 | 54.87 | 52.43 |
| ZrO₂ | | | | | | | | | | |
| Al₂O₃ | 14.98 | 12.46 | 12.48 | 14.98 | 14.98 | 14.96 | 14.96 | 14.96 | 18.95 | 12.48 |
| B₂O₃ | | 1.00 | 1.00 | 1.00 | 1.00 | 1.00 | 1.20 | 0.50 | 1.50 | |
| MgO | 24.96 | 27.92 | 23.97 | 20.48 | 22.97 | 25.43 | 27.52 | 28.89 | 22.94 | 24.97 |
| CaO | 4.99 | 0.16 | 3.99 | 7.49 | 4.99 | 0.15 | 0.17 | 0.16 | 0.14 | 9.99 |
| SrO | | | | | | | | | | |
| BaO | | | | | | | | | | |
| ZnO | | | | | | | | | | |
| Li₂O | | 1.00 | 1.00 | 1.00 | 1.00 | 1.00 | 1.20 | 0.50 | 1.50 | |
| Na₂O | 0.08 | 0.05 | 0.2 | 0.05 | 0.05 | 0.05 | 0.05 | 0.05 | 0.05 | 0.03 |
| K₂O | | 0.01 | | 0.01 | 0.01 | 0.01 | 0.01 | | 0.01 | 0.01 |
| Fe₂O₃ | 0.05 | 0.06 | 0.02 | 0.04 | 0.05 | 0.05 | 0.05 | 0.05 | 0.04 | 0.08 |
| TiO₂ | 0.01 | 0.01 | 0.01 | 0.01 | 0.01 | 0.01 | 0.01 | 0.01 | 0.01 | 0.01 |
| Y₂O₃ | | | | | | | | | | |
| La₂O₃ | | | | | | | | | | |
| Sum | 100.0 | 100.0 | 100.1 | 100.0 | 100.0 | 100.0 | 100.0 | 100.0 | 100.0 | 100.0 |
| Al₂O₃/RO | 0.50 | 0.44 | 0.45 | 0.54 | 0.54 | 0.58 | 0.54 | 0.51 | 0.82 | 0.36 |
| Al₂O₃/(SiO₂+Al₂O₃) | 0.21 | 0.18 | 0.18 | 0.21 | 0.21 | 0.21 | 0.21 | 0.21 | 0.26 | 0.19 |
| Specific gravity | 2.65 | 2.60 | 2.61 | 2.61 | 2.62 | 2.60 | 2.62 | 2.63 | 2.65 | 2.70 |
| Young's modulus (GPa) | 102.7 | 101.8 | 100.0 | 100.9 | 102.2 | 101.9 | 101.8 | 104.3 | 103.2 | 102.4 |
| Specific elastic modulus (MNm/kg) | 38.7 | 39.2 | 38.3 | 38.7 | 39.0 | 39.3 | 38.9 | 39.7 | 39.0 | 37.9 |
| Crack resistance load (g) | 400 | 500 | 440 | 330 | 400 | 1000 | 400 | 600 | 1500 | 200 |
| Devitrification temperature TL | 1395 | 1335 | 1280 | 1318 | 1345 | 1400 | 1345 | 1375 | 1426 | 1280 |
| T3 (logη = 3) | 1270 | 1268 | 1259 | 1270 | 1270 | 1258 | 1270 | 1270 | 1284 | 1218 |
| T2.5 (logη = 2.5) | 1340 | 1351 | 1357 | 1340 | 1340 | 1371 | 1340 | 1340 | 1359 | 1287 |
| T2 (logη = 2) | 1429 | 1458 | 1445 | 1430 | 1430 | 1462 | 1430 | 1430 | 1450 | 1373 |
| ΔT | 34 | 123 | 165 | 112 | 85 | 62 | 85 | 55 | 24 | 93 |
| Tg | 771 | 720 | 726 | 721 | 730 | 754 | 759 | 790 | 772 | 733 |

| | | | | | | | | | | |
|---|---|---|---|---|---|---|---|---|---|---|
| RO = (MgO+CaO); the contents of the components are shown in mol%; the units of TL to Tg are °C | | | | | | | | | | |

**[Table 2]**

| Comparative Example No. | 1 | 2 | 3 | 4 | 5 | 6 | 7 |
|---|---|---|---|---|---|---|---|
| SiO₂ | 61.89 | 66.0 | 53.60 | 57.30 | 54.87 | 63.95 | 62.25 |
| ZrO₂ | | | 3.00 | 1.80 | | | |
| Al₂O₃ | 11.74 | 17.0 | 18.00 | 17.60 | 14.96 | 16.99 | 11.60 |
| B₂O₃ | 1.54 | | 2.80 | | 7.48 | | |
| MgO | 23.49 | 17.0 | 4.30 | 8.30 | 22.45 | 8.99 | 24.83 |
| CaO | 0.13 | | | | 0.13 | 9.99 | 0.14 |
| SrO | | | | | | | |
| BaO | | | 0.60 | | | | |
| ZnO | | | 1.50 | | | | |
| Li₂O | | | | | | | |
| Na₂O | 1.07 | | | | 0.05 | 0.05 | 1.04 |
| K₂O | 0.07 | | | | 0.01 | 0.002 | 0.07 |
| Fe₂O₃ | 0.08 | | | | 0.04 | 0.02 | 0.07 |
| TiO₂ | 0.01 | | 2.40 | 2.40 | 0.01 | 0.003 | 0.01 |
| Y₂O₃ | | | 9.80 | 6.30 | | | |
| La₂O₃ | | | 3.90 | 6.30 | | | |
| Sum | 100.0 | 100.0 | 99.9 | 100.0 | 100.0 | 100.0 | 100.0 |
| Al₂O₃/RO | 0.50 | 1.00 | 4.19 | 2.12 | 0.66 | 0.89 | 0.46 |
| Al₂O₃/(SiO₂+Al₂O₃) | 0.16 | 0.20 | 0.25 | 0.23 | 0.21 | 0.21 | 0.16 |
| Specific gravity | 2.54 | 2.52 | 3.51 | 3.50 | 2.53 | 2.57 | 2.56 |
| Young's modulus (GPa) | 92.4 | 97.2 | 116.4 | 113.5 | 94.1 | 94.8 | 96.5 |
| Specific elastic modulus (MNm/kg) | 36.4 | 38.6 | 33.2 | 32.4 | 37.2 | 36.9 | 37.7 |
| Crack resistance load (g) | 550 | | | | 1000 | | 422 |
| Devitrification temperature TL | 1308 | ~1450 | 1268 | 1195 | 1335 | 1450 | 1348 |
| T3 (logη = 3) | 1346 | 1415 | 1208 | 1230 | | | |
| T2.5 (logη = 2.5) | 1438 | 1497 | 1258 | 1290 | | | |
| T2 (logη = 2) | 1550 | 1616 | 1337 | 1374 | | | |
| ΔT | 242 | > 166 | 69 | 179 | | | |
| Tg | 765 | 802 | | | | | |

| | | | | | | | |
|---|---|---|---|---|---|---|---|
| RO = (MgO+CaO); the contents of the components are shown in mol%; the units of TL to Tg are °C | | | | | | | |

## Claims

1. A glass composition for an information recording medium, the glass composition having a Young's modulus of 98 GPa or more and comprising 17 to 30 mol% MgO.

2. The glass composition according to claim 1 comprising Al₂O₃.

3. The glass composition according to claim 1 having a specific elastic modulus of 36 MNm/kg or more.

4. The glass composition according to claim 1, further comprising 0.2 to 3 mol% Li₂O and 0.2 to 3 mol% B₂O₃.

5. The glass composition according to claim 1, having a value ΔT of 20°C or higher, the value ΔT being determined by subtracting a devitrification temperature from a liquidus temperature (T2).

6. The glass composition according to claim 1, further comprising Na₂O.

7. The glass composition according to claim 1, comprising, in mol%:
| | |
|---|---|
| SiO₂ | 50 to 65%; |
| Al₂O₃ | 7.5 to 26%; |
| MgO | 15 to 30%; |
| CaO | 0 to 8%; |
| B₂O₃ | 0 to 3%; |
| Li₂O | 0 to 3%; and |
| Na₂O | 0 to 0.2%, wherein |
a sum of a MgO content and a CaO content is 18 to 35 mol%, and
a molar ratio calculated from Al₂O₃/(MgO+CaO) is less than 1.

8. The glass composition according to claim 1, comprising, in mol%:
| | |
|---|---|
| SiO₂ | 53 to 60%; |
| Al₂O₃ | 11 to 15%; |
| MgO | 18 to 30%; |
| CaO | 0 to 5%; |
| B₂O₃ | 0.2 to 1.5%; |
| Li₂O | 0.5 to 2.5%; and |
| Na₂O | 0 to 0.2%, wherein |
a molar ratio calculated from Al₂O₃/(MgO+CaO) is 0.3 to 0.5.

9. The glass composition according to claim 1, comprising, in mol%:
| | |
|---|---|
| SiO₂ | 53 to 60%; |
| Al₂O₃ | 15 to 26%; |
| MgO | 17 to 30%; |
| CaO | 0 to 5%; |
| B₂O₃ | 0.2 to 3%; |
| Li₂O | 0.2 to 1.5%; and |
| Na₂O | 0 to 0.2%, wherein |
a molar ratio calculated from Al₂O₃/(MgO+CaO) is 0.5 to 1.0.

10. The glass composition according to claim 1, further comprising 50 to 57.8 mol% SiO₂, wherein
a sum of a TiO₂ content and an Y₂O₃ content is 3 mol% or less.

11. A glass sheet for an information recording medium, the glass sheet comprising the glass composition according to any one of claims 1 to 10.
